## Europäisches Patentamt

## European Patent Office

## Office européen des brevets

(19)

(11) Veröffentlichungsnummer : **0 133 870**
**B1**

(12) **EUROPÄISCHE PATENTSCHRIFT**

(45) Veröffentlichungstag der Patentschrift :
06.05.87

(21) Anmeldenummer : 84105572.6

(22) Anmeldetag : 16.05.84

(51) Int. Cl.⁴ : **F 04 B 49/00,** F 04 B 1/08

(54) **Regelvorrichtung für mehrere aus hydrostatischen Getrieben bestehende Antriebsaggregate.**

(30) Priorität : 28.06.83 DE 3323278

(43) Veröffentlichungstag der Anmeldung :
13.03.85 Patentblatt 85/11

(45) Bekanntmachung des Hinweises auf die Patenterteilung : 06.05.87 Patentblatt 87/19

(84) Benannte Vertragsstaaten :
DE FR IT

(56) Entgegenhaltungen :
DE-A- 1 922 269
DE-A- 2 419 529
DE-A- 2 620 692
DE-A- 2 649 128
DE-A- 2 810 062
DE-A- 2 937 960
DE-A- 3 024 399
DE-B- 1 267 092
DE-B- 2 038 414

(73) Patentinhaber : Hydromatik GmbH
Glockeraustrasse 2
D-7915 Elchingen 2 (DE)

(72) Erfinder : Schniederjan, Reinhold
Bregenzer Strasse 15
D-7910 Neu-Ulm 8 (DE)

(74) Vertreter : Körber, Wolfhart, Dr. et al
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse
10
D-8000 München 22 (DE)

## Beschreibung

Die Erfindung bezieht sich auf eine Regelvorrichtung für mehrere aus hydrostatischen Getrieben bestehende Antriebsaggregate, deren Hydropumpen durch eine gemeinsame Antriebsmaschine angetrieben sind und von denen eine erste Pumpe oder Pumpengruppe mit einer hyperbolischen (Summen)-Leistungsregeleinrichtung ausgestattet ist und eine zweite Pumpe eines im Regelungsfalle leistungsbevorzugten Antriebsaggregates vorgesehen ist, wobei die Leistungsregeleinrichtung aus einem mit dem Stellglied der ersten Pumpe oder Pumpengruppe verbundenen, beiderseits mit Druck beaufschlagten Stellkolben und einem die Druckbeaufschlagung der beiden Druckräume vor den Stirnflächen des Stellkolbens steuernden Steuerschiebers besteht, der einerseits vom Arbeitsdruck der ersten Pumpe oder Pumpengruppe und andererseits von einer einstellbaren Feder beaufschlagt ist.

Innerhalb einer Arbeitsmaschine, beispielsweise einer Baumaschine wie Bagger und dergleichen, ist es üblich, einen einzigen Antriebsmotor für die mehreren Hydropumpen der verschiedenen Antriebsaggregate vorzusehen. Die maximale Leistung dieses Antriebsmotors ist dabei kleiner als die Summe der maximalen Leistungen der Hydropumpen, da im praktischen Betrieb selten sämtliche Antriebsaggregate gleichzeitig mit voller Leistung zu betreiben sind.

Im einfachsten Fall hat eine der Hydropumpen eines Antriebsaggregates einen konstanten Durchsatz und versorgt einen Arbeitskreis, der als vorrangig betrachtet wird, während eine weitere dieser Hydropumpen oder Gruppe von Hydropumpen einen veränderlichen Durchsatz haben und weitere Arbeitskreise versorgen, die ihrerseits nicht vorrangig sind. Für den Fall, daß die Summe der in einem gegebenen Augenblick für den Antrieb der bevorzugten Hydropumpe und der weiteren Pumpen oder Pumpengruppen erforderlichen Leistungen größer ist als die maximale Leistung des Antriebsmotors, muß eine Einrichtung vorgesehen sein, die eine Fortsetzung des Antriebes der bevorzugten Hydropumpe mit der gewünschten Leistung gestattet, d. h. den vorrangigen Kreis bevorzugt und die automatisch die Antriebsleistung der weiteren Hydropumpe oder Pumpengruppen in der Weise begrenzt, daß die für den Antrieb aller Pumpen erforderliche gesamte Leistung kleiner oder wenigstens gleich der maximalen Leistung des Antriebsmotors bleibt.

Eine solche Vorrichtung mit Bevorzugung eines Antriebsaggregates ist beispielsweise aus der DE-OS 24 19 529 bekannt geworden. Die dort zur Lösung vorgeschlagene Ventilsteuerung für die Bevorzugung eines Arbeitskreislaufes ist jedoch sehr aufwendig und leistungsverzehrend.

Aus der DE-AS 20 38 414 ist eine Regelvorrichtung für den hydrostatischen Fahrantrieb und die Arbeitsgeräteantriebe bei einem Laderfahrzeug bekannt geworden, bei der die Hydropumpe des hydrostatischen Arbeitsgeräteantriebes eine bevorzugte Konstantpumpe ist, während die Pumpe bzw. Pumpen der hydrostatischen Fahrantriebe summenleistungsgeregelt sind. Dazu wird der Arbeitsdruck der bevorzugten Hydropumpe des Arbeitsgeräteantriebes auf eine Stufenfläche des Stufenkolbens des Summenleistungsreglers für die nicht bevorzugte Hydropumpe bzw. Hydropumpen gegeben. Eine solche Regelvorrichtung ist nicht universell verwendbar, da eine Anpassung an verschiedene Pumpengrößen und Aggregate-Kombinationen nur durch einen anderen Summenleistungsregler mit anderer Abstufung des Stufenkolbens möglich ist.

Regelvorrichtung der eingangs genannten Art, allerdings ohne Bevorzugung einer Hydropumpe bzw. eines von dieser gespeisten hydrostatischen Antriebes, sind aus der DE-AS 12 67 092 und DE-OS 28 10 062 bekannt geworden. Dabei ist im Stellkolben des Leistungsreglers querverschieblich der Steuerschieber angeordnet, der von einer einstellbaren Feder vorbelastet ist und andererseits vom Arbeitsdruck der Pumpe bzw. Pumpen beaufschlagt wird.

Der Erfindung liegt die Aufgabe zugrunde, eine Regelvorrichtung der vorstehend genannten Art unter Einführung einer Bevorzugung mindestens einer der Hydropumpen so weiterzubilden, daß auf einfache Weise eine Anpassung für die Zuordnung einer vorrangigen Hydropumpe möglich ist.

Zur Lösung dieser Aufgabe wird bei einer Regelvorrichtung der eingangs und im Oberbegriff des Anspruches 1 genannten Art vorgeschlagen, daß ein Meßkolben vorgesehen ist, auf den der Arbeitsdruck der zweiten (bevorzugten) Hydropumpe des leistungsbevorzugten Antriebsaggregates einwirkt und der auf einen ersten Hebel drückt, der der Kraft der einstellbaren Feder auf den Steuerschieber entgegenwirkt, wobei die wirksame Hebelarmlänge für den Meßkolben auf den Hebel einstellbar ist.

Zweckmässige Ausgestaltungen sind in den Unteransprüchen 2 bis 4 gekennzeichnet.

Der Erfindung liegt als Grundgedanke für die Zuordnung einer weiteren bevorzugten Hydropumpe zur Leistungsregelung einer oder mehrer summenleistungsgeregelter Pumpen das Prinzip zugrunde, die Federvorspannung der die Regelcharakteristik bestimmenden Feder des Leistungsreglers bzw. des Steuerschiebers des Leistungsreglers durch Beaufschlagung dieser Feder mit Arbeitsdruck der weiteren bevorzugten Hydropumpe zu verändern. Die Anpassung an verschiedene bevorzugte Hydropumpen ist auf einfache Weise durch Veränderung der wirksamen Hebelarmlänge für den Meßkolben möglich, der auf den die Federvorspannung verändernden Hebel einwirkt.

Die erfindungsgemässe Regelvorrichtung arbeitet auch dann, wenn die weitere bevorzugte Hydropumpe eine für sich leistungsgeregelte Pumpe ist. Bei Regelbeginn ist dann lediglich beispielsweise durch ein Druckminderventil darauf zu achten, daß der auf den Meßkolben und den Hebel wirkende Arbeitsdruck dieser bevorzugten Pumpe konstant gehalten wird.

Ist bei einer erfindungsgemässen Regelvorrichtung anstelle einer einzelnen nicht bevorzugten Hydropumpe eine Gruppe von Pumpen vorgesehen, welche beispielsweise als Doppel- oder Mehrfachpumpen bezüglich der Leistungsregeleinrichtung gekoppelt sind, ist in zweckmässiger Ausgestaltung der Erfindung dem Stellkolben bzw. dem Steuerschieber ein Druckmittler vorgeordnet, welcher einen aus den Arbeitsdrücken der einzelnen Pumpen der Gruppe gemittelten Druck bildet. Ein solcher Druckmittler kann beispielsweise entsprechend dem Gegenstand der älteren Anmeldung P 33 10 791.2 der Anmelderin ausgebildet sein.

Eine zweckmässige Ausgestaltung der Erfindung wird im folgenden anhand der beigefügten Zeichnungen näher beschrieben. Es zeigen

Figur 1 schematisch eine erfindungsgemässe Regelvorrichtung mit einer vorrangigen und einer nachrangigen Hydropumpe ; und

Figur 2 eine entsprechende Ausführungsform der Erfindung für eine Doppelpumpe als nachrangige Hydropumpe,

wobei in beiden Figuren unten im Ausschnitt die Anordnung eines Druckminderventiles vor dem Meßkolben gezeigt ist, wenn die vorrangige Pumpe eine für sich leistungsgeregelte Pumpe ist.

Mit 1 ist eine erste Pumpe eines hydrostatischen Getriebes eines Antriebsaggregates bezeichnet. Diese erste Pumpe 1 ist leistungsgeregelt durch einen mit ihrer Fördermengenverstelleinrichtung 2 verbundenen Stellkolben 3 in einem Gehäuse 4. Auf den Stellkolben 3 wirkt einerseits auf die Fläche 5 der Druck in der Arbeitsleitung 6 des durch die Pumpe 1 gespeisten hydrostatischen Getriebes. Andererseits wirkt auf die größere Fläche 7 des Stellkolbens 3 gegen den Druck der Feder 8 eine Regeldruck, welcher vom Arbeitsdruck entsprechend der Stellung eines Steuerschiebers 9, der quer im Stellkolben 3 liegt, abgeleitet wird. Auf den Steuerschieber 9 wirkt einerseits auf die Fläche 10 ebenfalls der Arbeitsdruck der Leitung 6 und andererseits über einen zweiten Hebel 11, der als Winkelhebel ausgebildet ist, eine einstellbare Feder 12, deren Vorspannung die Regelcharakteristik bestimmt. Gegenüber der Feder 12 greift am zweiten Hebel 11 ein erster Hebel 13 an, welcher an einem gehäusefesten Lagerpunkt 14 abgestützt ist und auf dessen zweiten Arm ein Meßkolben 15 wirkt, dessen Kolbenfläche 16 vom Arbeitsdruck in der Leitung 17 eines bevorzugten hydrostatischen Getriebes beaufschlagt wird, zu dem die bevorzugte zweite Hydropumpe 18 gehört. Das Lager 14 für den Hebel 13 ist im nicht dargestellten Gehäuse verschiebbar entsprechend den angedeuteten Pfeilen. so daß die wirksame Hebelarmlänge bezüglich des Meßkolbens 15 auf den Hebel 13 einstellbar ist.

Im Regelungsfalle drückt der Meßkolben 15 gegen den Hebel 13 und dieser wirkt am Hebel 11 gegen die Vorspanneinstellung der Meßfeder 13, so daß die Regelungscharakteristik der Feder 12 für den Steuerschieber 9 verändert wird.

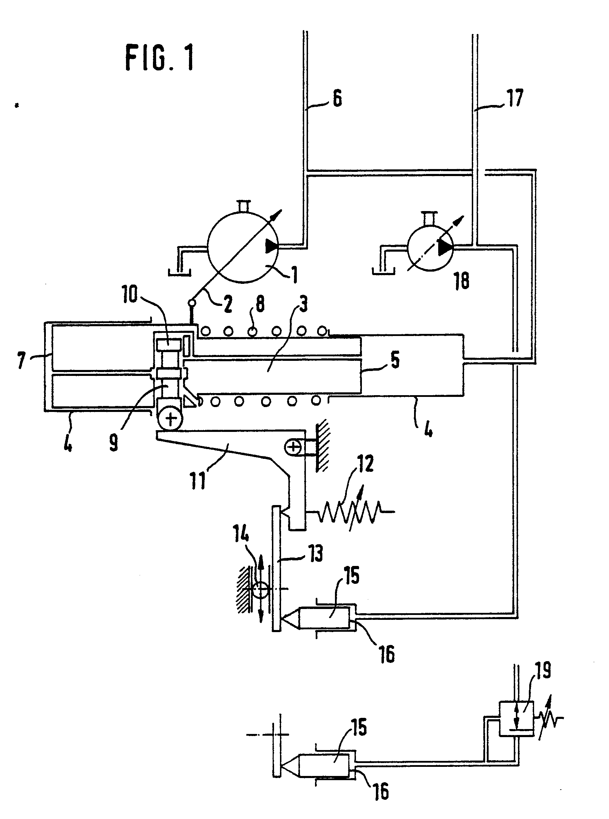

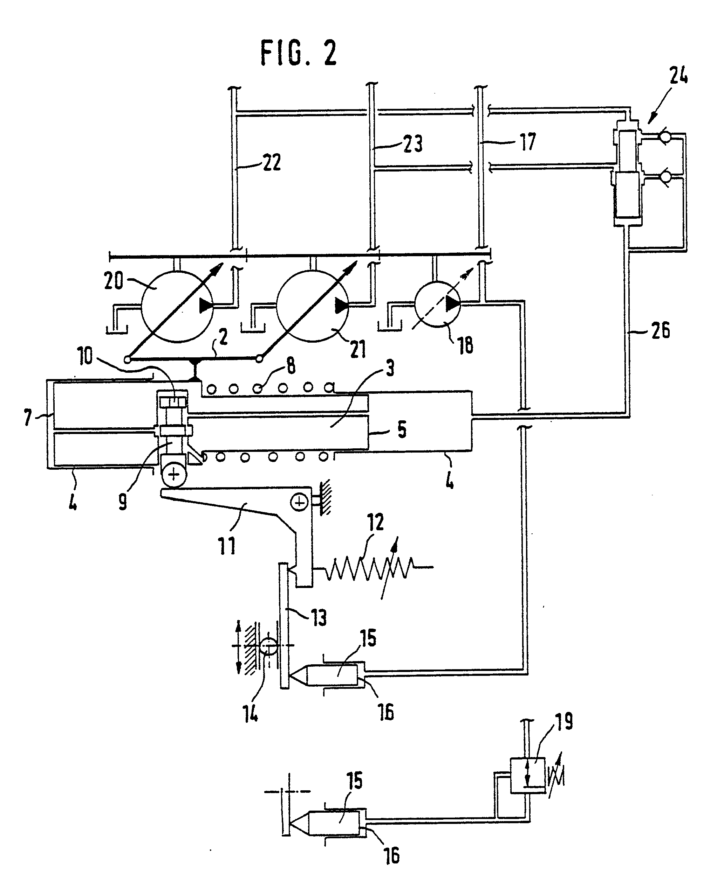

In den Fig. 1 und 2 unten ist zusätzlich ein Druckminderventil 19 in der Leitung vor dem Meßkolben 15 dargestellt. Dieses ist erforderlich, falls es sich bei dem durch die zweite Pumpe 18 gespeisten bevorzugten hydrostatischen Getriebe um ein leistungsgeregeltes Getriebe handelt.

Die Ausführungsform nach Fig. 2 unterscheidet sich von derjenigen nach Fig. 1 nur dadurch, daß anstelle der ersten nicht bevorzugten Hydropumpe 1 gekoppelte Pumpen 20, 21 vorgesehen sind, für zwei gemeinsam leistungsgeregelte hydrostatische Getriebe mit den Arbeitsdruckleitungen 22, 23. Die Pumpen 20 und 21 sind mit ihren Fördermengenverstellvorrichtungen gekoppelt und mit dem Stellkolben 3 verbunden. Mit der Ausführungsform nach Fig. 1 übereinstimmende Teile sind mit gleichen Bezugszeichen versehen und werden nicht nochmals erläutert. In der zum Stellkolben 3 führenden Leitung 26, welche den der Leistungsregelung zugrundeliegenden Arbeitsdruck führen muß, ist ein mit 24 bezeichneter Druckmittler angeordnet, welche die Arbeitsdrücke in den Leitungen 22 und 23 mittelt, so daß die Pumpen 20 und 21 summenleistungsgeregelt sind. Der Druckmittler 24 ist entsprechend dem Gegenstand der DE-A 33 10 791 ausgebildet und wird nicht im Detail beschrieben.

## Patentansprüche

1. Regelvorrichtung für mehrere aus hydrostatischen Gebrieben bestehende Antriebsaggregate, deren Hydropumpen durch eine gemeinsame Antriebsmaschine angetrieben sind und von denen eine erste Pumpe (1) oder Pumpengruppe mit einer hyperbolischen (Summen)-Leistungsregeleinrichtung ausgestattet ist und eine zweite Pumpe (18) eines im Regelungsfalle leistungsbevorzugten Antriebsaggregates vorgesehen ist, wobei die Leistungsregeleinrichtung aus einem mit dem Stellglied (2) der ersten Pumpe (1) oder Pumpengruppe verbundenen, beiderseits mit Druck beaufschlagten Stellkolben (3) und einem die Druckbeaufschlagung des Stellkolbens steuernden Steuerschieber (9) besteht, der einerseits vom Arbeitsdruck der ersten Pumpe (1) oder Pumpengruppe und andererseits von einer einstellbaren Feder (12) beaufschlagt ist, dadurch gekennzeichnet, daß ein Meßkolben (15) vorgesehen ist. auf den der Arbeitsdruck der zweiten Hydropumpe (18) des leistungsbevorzugten Antriebsaggregates einwirkt und der auf einen ersten Hebel (13) drückt, der der Kraft der einstellbaren Feder (12) auf den Steuerschieber (9) entgegenwirkt, wobei die wirksame Hebelarmlänge für den Meßkolben (15) auf den Hebel einstellbar ist.

2. Regelvorrichtung nach Anspruch 1. dadurch gekennzeichnet, daß der Drehpunkt (14) des Hebels (13) am Gehäuse des Steuerschiebers verschiebbar ist.

3. Regelvorrichtung nach Anspruch 1, dadurch gekennzeichnet, daß der Steuerschieber (9) zwei unterschiedlich große Arbeitsflächen (5, 7) aufweist, und daß auf die kleinere Arbeitsfläche (5) der Druck des durch die erste Pumpe (1) gespeisten hydrostatischen Getriebes und auf die größere Arbeitsfläche (7) ein durch den Steuerschieber (9) gesteuerter Regeldruck wirkt.

4. Regelvorrichtung nach einem der Ansprüche 1 bis 3, dadurch gekennzeichnet, daß der Steuerschieber (9) im Stellkolben (3) quer zu dessen Längsachse angeordnet ist und die einstellbare Feder (12) über einen zweiten im Gehäuse drehgelagerten Hebel (11) auf den Steuerschieber (9) einwirkt.

5. Regelvorrichtung nach Anspruch 4, dadurch gekennzeichnet, daß der zweite Hebel (11) einen parallel zur Längsachse des Stellkolbens (3) verlaufenden Hebelarm hat, an dem der Steuerschieber (9) gleitend anliegt und daß der erste Hebel (13) an dem zweiten Hebel (11) entgegen der Kraft der auf den zweiten Hebel (11) wirkenden einstellbaren Feder (12) einwirkt.

6. Regelvorrichtung nach einem der Ansprüche 1 bis 5, dadurch gekennzeichnet, daß bei Anordnung einer ersten Pumpengruppe (20, 21) der Summenleistungsregeleinrichtung ein Druckmittler (24) vorgeordnet ist, welcher einen aus den Arbeitsdrücken der einzelnen Pumpen (20, 21) der Gruppen gemittelten Druck bildet, der als Arbeitsdruck auf die eine Seite des Steuerschiebers (9) bzw. Stellkolbens (3) gegeben wird.

**Claims**

1. Control apparatus for several drive assemblies, which consist of hydrostatic drive units, the hydraulic pumps of which assemblies are driven by means of a common prime mover and of which pumps a first pump (1) or group of pumps is equipped with a hyperbolic (total) output control device and there is a second pump (18) of a drive assembly, which is output-preferred in the control situation, wherein the output control device consists of an adjusting piston (3), which is connected with the control element (2) of the first pump (1) or group of pumps and upon both sides of which pressure acts, and of a spool valve (9) which controls the pressure action on the adjusting piston and upon which, on one side, the working pressure of the first pump (1) or group of pumps acts and upon which, on the other side, an adjustable spring (12) acts, characterized in that there is provided a measuring piston (15) upon which acts the working pressure of the second hydraulic pump (18) of the drive assembly which is output-preferred, and which presses on a first lever (13) which counteracts the force of the adjustable spring (12) acting upon the spool valve (9), and wherein the effective lever arm length for the measuring piston (15) on the lever is adjustable.

2. Control apparatus according to claim 1, characterized in that the fulcrum (14) of the lever (13) is shiftable on the housing of the spool valve.

3. Control apparatus according to claim 1, characterized in that the spool valve (9) has two surfaces (5, 7) which are different in size, and the pressure of the hydrostatic transmission fed by the first pump (1) acts upon the smaller surface (5) and a control pressure controlled by the spool valve (9) acts upon the larger surface.

4. Control apparatus according to any one of claims 1 to 3, characterized in that the spool valve (9) is arranged in the adjusting piston (3) crosswise in respect of the latter's longitudinal axis and the adjustable spring (12) acts on the spool valve (9) by way of a second lever (11) which is pivoted in the housing.

5. Control apparatus according to claim 4, characterized in that the second lever (11) has a lever arm which extends parallel to the longitudinal axis of the adjusting piston (3) and against which the spool valve (9) rests in a sliding manner, and in that the first lever (13) acts on the second lever (11) against the force of the adjustable spring (12) which acts on the second lever (11).

6. Control apparatus according to any one of claims 1 to 3, characterized in that with a first group of pumps (20, 21) a pressure averager (24) is arranged before the total output control device, which averager produces an average pressure from the working pressures of the individual pumps of the groups (20, 21) and this pressure is transmitted as the working pressure to the one side of the spool valve (9) and the adjusting piston (3).

**Revendications**

1. Dispositif de réglage pour plusieurs ensembles d'entraînement constitués par des transmissions hydrauliques dont les pompes hydrauliques sont entraînées par une machine motrice commune, et dont une première pompe (1), ou groupe de pompes, est équipée d'un dispositif de réglage de puissance cumulatif hyperbolique, et pour lequel est prévue une seconde pompe (18) pour un ensemble de transmission dont la puissance est privilégiée en cas de réglage, ledit dispositif de réglage se composant d'un piston de réglage (3) sous pression des deux côtés, relié à un organe de réglage (2) de la première pompe (1), ou groupe de pompes, et d'un tiroir de pilotage (9) qui pilote la pression qui s'exerce sur le piston de réglage et qui est, d'une part, sous la pression de travail de la première pompe (1), ou groupe de pompes, et, d'autre part, sous celle d'un ressort (12) réglable, caractérisé par le fait qu'il est prévu un piston de mesure (15) sur lequel agit la pression de travail de la deuxième pompe hydraulique (18) de l'ensemble de transmission dont la puissance est privilégiée et qui pousse un premier levier (13) agissant à l'encontre de la force du ressort (12) réglable, la longueur de bras de levier utile pour le piston de mesure (15) étant réglable sur le levier.

2. Dispositif selon la revendication 1, caractérisé par le fait que le point de rotation (14) du levier (13) peut coulisser sur le corps du tiroir de pilotage.

3. Dispositif de réglage selon la revendication 1, caractérisé par le fait que le tiroir de pilotage (9) présente deux surfaces de travail (5, 7) de dimensions différentes et que la pression de la transmission hydraulique alimentée par la première pompe (1) agit sur la plus petite surface de travail et qu'une pression de réglage, pilotée par le tiroir de pilotage (9), agit sur la plus grande surface de travail (7).

4. Dispositif de réglage selon l'une des revendications 1 à 3, caractérisé par le fait que le tiroir de pilotage (9) est disposé sur le piston de réglage (3) transversalement par rapport à son axe longitudinal et que le ressort (12) réglable agit sur le tiroir de pilotage (9), grâce à un deuxième levier (11) monté de façon pivotante sur le corps.

5. Dispositif de réglage selon la revendication 4, caractérisé par le fait que le deuxième levier (11) possède un bras s'étendant parallèlement à l'axe longitudinal du piston de réglage (3) sur lequel le tiroir de pilotage (9) est disposé de façon coulissante, et que le premier levier (13) agit sur un second levier (11), à l'encontre de la force du ressort réglable (12) agissant sur le second levier (11).

6. Dispositif de réglage selon l'une des revendications 1 à 5, caractérisé par le fait que lorsqu'on dispose un premier groupe de pompes (20, 21) on met en place un égaliseur de pression (24) avant le dispositif de réglage de puissance cumulatif, cet égaliseur de pression (24) procurant une pression qui résulte de l'égalisation des pressions de travail des pompes individuelles (20, 21) des groupes, laquelle pression est délivrée en tant que pression de travail sur une des faces du tiroir de pilotage (9) ou du piston de réglage (3).

# FIG. 1

# FIG. 2